# EUROPÄISCHE PATENTANMELDUNG

(11) **EP 0 913 560 A1**
(43) Veröffentlichungstag der Anmeldung: **06.05.1999**
(21) Anmeldenummer: 98117812.2
(22) Anmeldetag: 19.09.1998
(51) Int. Cl.: F01N 3/20, F01N 9/00, H02J 7/14

(54) **Verfahren zur Verbesserung der Abgasemissionen einer Brennkraftmaschine**

(30) Priorität: 03.11.1997 DE 19748421
(71) Anmelder: DaimlerChrysler AG, 70567 Stuttgart (DE)
(72) Erfinder: Gross, Christof, 70327 Stuttgart (DE); Schmidt, Klaus, 74336 Brackenheim (DE)

(57) **Zusammenfassung**

Die vorliegende Erfindung betrifft ein Verfahren zur Verbesserung der Abgasemissionen einer Brennkraftmaschine mit einem Abgaskatalysator, wobei der Abgaskatalysator nach dem Start der Brennkraftmaschine aufgeheizt wird, wobei während der Aufheizphase des Abgaskatalysators eine Regelung der von dem bzw. den Generatoren abgegebenen Leistung erfolgt, wobei die von dem Generator bzw. den Generatoren abgegebene Leistung so geregelt wird, daß diese Leistung während einer Zeitdauer reduziert wird bis der Abgaskatalysator eine bestimmte Mindesttemperatur erreicht hat.

## Beschreibung

Die vorliegende Erfindung betrifft ein Verfahren zur Verbesserung der Abgasemissionen einer Brennkraftmaschine mit einem Abgaskatalysator, wobei der Abgaskatalysator nach dem Start der Brennkraftmaschine aufgeheizt wird, wobei die Leistungsabgabe des Generators während der Aufheizphase des Abgaskatalysators reduziert wird bis der Abgaskatalysator eine bestimme Mindesttemperatur erreicht hat, gemäß dem Oberbegriff des Patentanspruches 1.

Das Erreichen der Betriebstemperatur des Abgaskatalysators kann beispielsweise erkannt werden durch eine Temperaturmessung oder auch durch eine Auswertung der Einschaltdauer der Heizeinrichtung.

Es ist bereits ein derartiges Verfahren bekannt (DE 39 39 068 C2), bei dem in der Aufheizphase des Katalysators die Heizung des Katalysators von dem Generator getrennt und nur durch die Batterie betrieben wird. Aufgrund der vergleichsweise kurzen Einschaltdauer der Heizung soll dabei die Batterie nicht übermaßig stark beansprucht werden. Indem durch die entfallende Belasung Des Generators weiterhin die Brennkraftmaschine entlastet wird, verbessern sich die Abgasemissionen. Eine optimale Abgasreinigung durch den Katalysator ist erst dann gegeben, wenn der Abgaskatalalysator seine Betriebstemperatur erreicht hat. Die bestimmte Mindesttemperatur entspricht also dieser Betriebstemperatur oder liegt etwas darunter. Es ist in diesem Zusammenhang auch bekannt, mehrere Generatoren vorzusehen, von denen nur einer während der Aufheizphase des Abgaskatalysators in Betrieb ist.

Weiterhin ist ein Verfahren bekannt (DE 43 35 771 C1), bei dem für den Abgaskatalysator eine Heizeinrichtung vorgesehen ist, die in der Aufheizphase des Abgaskatalysators den Abgaskatalysator erwärmt indem diese Heizeinrichtung mit elekrischer Energie beaufschlagt wird. Da diese mittels elekrischer Energie betriebene Heizeinrichtung einen vergleichsweise großen Verbraucher darstellt wird bei dem Gegenstand der DE 43 35 711 C1 die von dem Generator abgegebene Leistung erhöht, um die Belastung der Batterien durch die Heizeinrichtung in Grenzen zu halten. Bei dem Gegenstand der DE 43 35 771 C1 soll der Abgaskatalysator möglichst schnell seine Betriebstemperatur erreichen, um dann seine Funkion erfüllen zu können und möglichst frühzeitig während des laufenden Betriebes der Brennkraftmaschine die Abgasemissionen der Brennkraftmaschine zu verbessern. Um den entsprechenden Strombedarf der Heizeinrichtung zu decken, wird der Generator so geregelt, daß in der Aufheizphase des Abgaskatalysators die von dem Generator abgegebene Leistung erhöht wird.

Der vorliegenden Erfindung liegt die Aufgabe zugrunde, die Abgasemissionen einer Brennkraftmaschine zu verbessern, wobei gleichzeitig die Belastung der Batterieanordnung begrenzt bleiben soll.

Erfindungsgemäß wird diese Aufgabe gelöst, indem während der Aufhierzphase die von dem Generator abgegebene Leistung eingestellt wird, indem durch einen Eingriff in den Generator die von diesem abgegebene Leistung derart reduziert wird, daß diese größer ist als 0, wobei die Leistung gegenüber dem Normalbetrieb nach der Aufheizphase reduziert wird.

Der Eingriff kann beispielsweise erfolgen, indem die Erregung des Generators abgeschaltet wird.

Erfindungsgemäß soll also die Last der Brennkraftmaschine reduziert werden bis diese Betriebstemperatur erreicht ist. Durch die Reduzierung der Last der Brennkraftmaschine wird der Schadstoffausstoß der Brennkraftmaschine reduziert bis der Abgaskatalysator einsetzt.

Die Heizleistung der Heizeinrichtung des Abgaskatalysators wird beispielsweise durch eine Batterie unterstützt, die wiederum geladen wird, wenn der Abgaskatalysator seine Betriebstemperatur erreicht hat. In der Gesamtbilanz der Abgasemissionen ergibt sich durch dieses Verfahren zumindest unter bestimmten Betriebsbedingungen mit hinreichenden Zeiträumen, in denen die Batterie geladen wird, eine Verbesserung der Gesamtbild der Abgasemissionen.

Eine übermäßig starke Entladung der Batterie wird vorteilhaft vermieden, weil der Generator noch in einem gewissen Umfang Leistung abgibt.

Gegenüber der aus der DE 39 39 068 C2 bekannten Vorgehensweise, eine Unterstützung der Batterie durch eine Restleistung eines Generators vorzusehen, indem eine Generatoranordnung verwendet wird, die aus mehreren Generatoren besteht, von denen in der Aufheizphase nur einer In Betriebist, ergibt sich bei dem erfindungsgemäßen Verfahren als Vorteil, daß lediglich ein Generator als Bauteil vorgesehen werden muß, wobei die Leistung dieses einen Bauteiles entsprechend eingestellt wird.

In Kenntnis der Erfindung sei weiterhin noch auf die DE 40 42 347 A1 verwiesen, aus der es bekannt ist, die von dem Generator abgegebene Leistung zu reduzieren bis die Brennkraftmaschine ihre Betriebstemperatur erreicht hat. Diese Maßnahme soll dort dazu dienen, einen unrunden Lauf der Brennkraftmaschine zu vermeiden. Ein Hinweis auf die Reduzierung der Abgasemissionen wird dort nicht gegeben. Indem dort auf die Betriebstemperatur der Brennkraftmaschine und nicht auf die Betriebstemperatur des Abgaskatalysators abgestellt wird, betrifft dieser Gegenstand eine andere Aufgabenstellung.

Bei dem Verfahren nach Anspruch 2 wird die Generatorleistung so geregelt, daß bestimmte Grenzwerte der Bordnetzspannung nicht unterschritten werden.

Dadurch wird vorteilhaft sichergestellt, daß die Funktion anderer elektrischer Verbraucher gewährleistet ist. Dies ist besonders bedeutsam bei sicherheitsrelevanten Funktionen wie beispielsweise dem Airbag oder einem Antiblockiersystem für die Räder des Fahrzeuges.

Ebenso ist es auch denkbar, die Zahl der zuschaltbaren elektrischen Verbraucher nach deren Wichtigkeit für den sicheren Betrieb des Kraftfahrzeuges zu begrenzen, um den Gesamtstrombedarf während der Zeit zu reduzieren, bis der Abgaskatalysator seine Betriebstemperatur erreicht hat. Es sind bereits verschiedene Verfahren zur Reduzierung der Leistungsaufnahme von elektrischen Verbraucher in einem Kraftfahrzeug bekannt, bei denen die Schonung der Barterie im Vordergrund steht. Die Vorgehensweise bei diesen Verfahren könnte also in diesem Punkt gegebenenfalls übertragen werden auf das vorstehend beschriebene Verfahren.

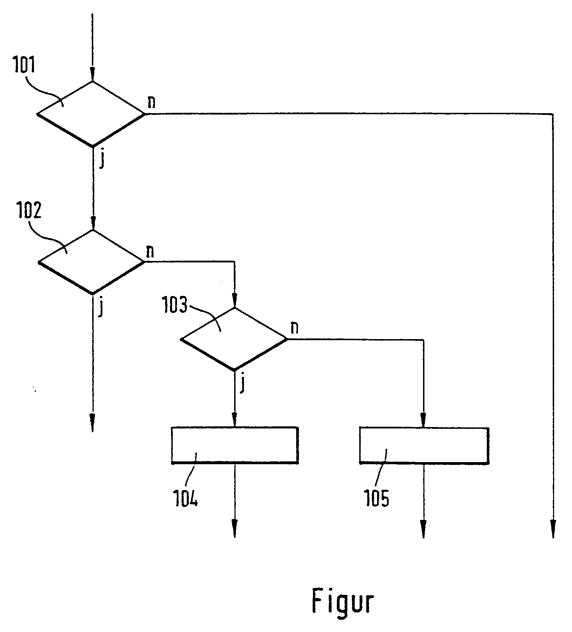

Ein Ausfühungsbeispiel der Erfindung ist in der Zeichnung dargestellt Die einzige Figur zeigt dabei ein Ablaufdiagramm des erfindungsgemäßen Verfahrens.

Zunächst wird in dem Schritt 101 geprüft, ob die Herzeinrichtung des Abgaskatalysators nach dem Startvorgang der Brennkraftmaschine eingeschaltet ist.

Ist dies nicht der Fall, ist der Durchlauf des Verfahrens beendet.

Andernfalls erfolgt ein Überang zu dem Schritt 102, in dem überprüft wird, ob der Abgaskatalysator seine bestimmte Mindesttemperatur noch nicht erreicht hat. Dazu kann beispielsweise die Temperatur des Abgaskatalysators gemessen und ausgewertet werden. Es ist auch möglich, aus der Einschaltdauer der Herzeinrichtung auf die Temperatur des Abgaskatalysators zu schließen.

Wird in dem Schritt 102 festgestellt, daß die bestimmte Mindesttemperatur noch nicht erreicht ist, wird der Durchlauf des Verfahrens beendet.

Andernfalls erfolgt ein Übergang zu dem Schritt 103, in dem die Bordnetzspannung darauf überprüft wird, daß ein bestimmter Mindestwert der Bordnetzspannung nicht unterschritten wird.

Wenn dieser bestimmte Mindestwert der Bordnetzspannung nicht unterschritten wird, erfolgt ein Übergang zu dem Schritt 104, in dem die von dem Generator ausgegebene Leistung reduziert wird. Dies kann beispielsweise durch Abschalten der elektrischen Erregung des Generators erfolgen.

Wird der bestimmte Mindestwert der Bordnetzspannung unterschritten, erfolgt ein Übergang zu dem Schritt 105, in dem die von dem Generator ausgegebene Leistung so geregelt wird, daß die Bordnetzspannung den Mindestwert der Bordnetzspannung wieder überschreitet. Dadurch können vorteilhaft die Funktionen anderer elektrischer Verbraucher aufrecht erhalten werden.

Der in der Figur dargestellt Verfahrersablauf kann beispielsweise als Programmteil eines programmierbaren Steuergerätes realisiert sein, wobei dieser Programmteil zyklisch durchlaufen wird.

## Patentansprüche

1. Verfahren zur Verbesserung der Abgasemissionen einer Brennkraftmaschine mit einem Abgaskatalysator, wobei der Abgaskatalysator nach dem Start der Brennkraftmaschine aufgeheizt wird, wobei die Leistungsabgabe des Generators während der Aufheizphase des Abgaskatalysators reduziert wird bis der Abgaskatalysator eine bestimmte Mindesttemperatur erreicht hat,
dadurch gekennzeichnet, daß während der Aufheizphase die von dem Generator abgegebene Leistung eingestellt wird, indem durch einen Eingriff in den Generator die von diesem abgegebene Leistung derart reduziert wird, daß diese größer ist als 0, wobei die Leistung gegenüber dem Normalbetrieb nach der Aufheizphase reduziert wird (104, 102).

2. Verfahren nach Anspruch 1,
dadurch gekennzeichnet, daß die Generatorleistung so geregelt wird (105), daß bestimmte Grenzwerte der Bordnetzspannung nicht unterschritten werden (103).
